(19) Europäisches Patentamt
European Patent Office
Office européen des brevets

(11) EP 2 399 943 A1

(12) EUROPEAN PATENT APPLICATION

(43) Date of publication:
28.12.2011 Bulletin 2011/52

(51) Int Cl.:
C08F 10/02 (2006.01)          C08F 4/651 (2006.01)
C08F 4/655 (2006.01)

(21) Application number: 10167508.0

(22) Date of filing: 28.06.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(71) Applicant: Borealis AG
1220 Vienna (AT)

(72) Inventors:
• Leinonen, Timo
  06750, Tolkkinen (FI)
• Denifl, Peter
  00990, Helsinki (FI)
• Surakka, Marina
  01490, Vantaa (FI)

• Kipiani, Georgy
  00810, Helsinki (FI)
• Kokko, Esa
  01520, Vantaa (FI)
• Vestberg, Torvald
  06100, Porvoo (FI)
• Eriksson, Virginie
  00810, Helsinki (FI)
• Garoff, Thomas
  00840, Helsinki (FI)
• Waldvogel, Päivi
  06450, Porvoo (FI)

(74) Representative: Lindinger, Ingrid
Borealis Polyolefine GmbH
St.-Peter-Straße 25
4021 Linz (AT)

(54) **Process for producing polyethylene**

(57) Process for the production of polyethylene with a PDI of 3.8 or less, comprising the presence of a Ziegler-Natta polypropylene procatalyst in the form of particles having a predetermined average size range of 5 to 200μm, obtained by emulsion/solidification technology.

Printed by Jouve, 75001 PARIS (FR)

## Description

The present invention relates to an improved process for producing polyethylene which allows the tailoring of the properties of the ethylene polymer composition by using a special Ziegler-Natta procatalyst prepared by emulsion/ solidification technology.

More specifically, the present invention relates to a process for producing polyethylene by using a Ziegler-Natta procatalyst, which is known in the state of the art as procatalyst for producing polypropylene.

## Background of the invention

The properties of olefin (co-)polymers are i.a. determined by the catalyst used for their production. Thus, there is an ongoing need for olefin polymerisation catalysts which allow for the production of polyethylene having improved and more controlled properties. In particular it is desirable that the catalyst allows for a "tailoring" of the properties of the produced resins.

Furthermore, in copolymers of ethylene with other alpha-olefins, the distribution of the alpha-olefin comonomer units in the ethylene copolymer is crucial because it is also a factor which determines the properties of the copolymer resin which, in turn, determine its applicability for commercial products.

The problem in the copolymerisation of ethylene with $C_4$-$C_{10}$-alpha-olefins in the presence of conventional types of Ziegler-Natta catalyst compositions is, that the comonomers tend to be irregularly distributed over the molecule chains yielding copolymers with uneven or poor comonomer composition distribution (CCD), which can be detected for example by TREF (Temperature Rising Elution Fractionation) method, Differential Scanning Calorimetry (DSC), GPC-FTIR (Gel Permeation Chromatography using an Fourier transform infrared spectroscopy detector) or measuring the amount of soluble polymer fraction by CRYSTAF (Crystallisation Analysis Fractionation).

In particular, a higher uniformity of the distribution of the branches has a positive effect on the properties of the copolymers. In fact, with the same type and quantity of incorporated alpha-olefin, a higher uniformity of distribution allows lower degrees of crystallinity and density to be obtained.

It is also known in the state of the art and described in WO 95/25758, that Ziegler-Natta catalyst compositions tend to change their behaviour during the polymerisation process in respect of time ("time-drift"), which has a huge impact on polymer properties and polymer homogeneity.

For example, such catalyst compositions show a change of comonomer response with time, leading to a remarkable drop in comonomer incorporation during the entire course of the polymerisation. This further leads to an increase of density in the course of the copolymerisation.

A further disadvantage is that using common Ziegler-Natta catalyst compositions often leads to a remarkable decrease of the melt flow rate (MRF), respectively increase of the molecular weight during copolymerisation.

This s.c. "time -drift" in catalyst behaviour causes even more problems if the polymerisation process is a continuous multi-stage process, where residence time distribution combined with the "time-drift" problem can lead to further inhomogeneity of the polymer produced. For example, it can happen, that catalyst particles that stayed a longer time in the first reactor may have very low comonomer response in the second reactor where copolymerisation is usually performed. In the worst case polymer particles are produced containing a lot of comonomer and on the other hand polymer particles containing virtually no comonomer at all are yielded.

For typical ZN catalyst systems it is known that the control of the polydispersity index (PDI), in particular if narrow PDI polymers are desired, is difficult to accomplish, so that for typical narrow PDI polyolefin materials single site catalysts (SSC) are used. Since these single site catalysts are much more expensive, more poison sensitive and more difficult to operate in the plant than ZN catalysts, it would however be a great advantage if also ZN catalysts, which allow a control of PDI, in particular in combination with reasonable high catalyst activity, would be available.

It is of particular interest to obtain a catalyst in particulate form which has a high catalyst activity and results in good and desired polymer properties and enables the control of PDI.

Accordingly, although much development work has been done in the field of Ziegler-Natta catalysts, there remains a continuing search for alternative or improved solid ZN procatalyst with desirable properties, such as high activity, high stability, suitable kinetics and even comonomer distribution, which allow the production of polyethylene polymers with narrow PDI.

It is thus an object of the present invention to provide an improved process for the production of polyethylene with improved properties which can be "tailored". I.e. it is a target of the invention to provide a process, which allows polymer properties, like polydispersity index, molecular weight, molecular weight distribution, and copolymer distribution to be tailored.

It has now surprisingly been found that these objects are achieved by a process for producing polyethylene in the presence of a Ziegler-Natta procatalyst which is prepared by emulsion/solidification technology and which is known in the state of the art as procatalyst for producing polypropylene.

It has been found that the process of the invention allows for the production of polyethylene the properties, especially PDI, of which can be "tailored" and "fine tuned" by the use of the special Ziegler-Natta procatalysts.

Especially polydispersity index (PDI = Mw/Mn), MWD (molecular weight distribution), density and Mw are properties, which are tailored by using the above described catalyst composition.

This means for example that the procatalysts used according to the invention show a at least similar but preferably lower loss in comonomer response respectively incorporation during the copolymerisation process. Also the change in molecular weight (or MFR) of the produced polymer is lower during copolymerisation compared to processes using conventional Ziegler-Natta PE procatalysts.

The present invention is therefore directed to a process for the production of polyethylene comprising the presence of a Ziegler-Natta polypropylene procatalyst in the form of particles having a predetermined average size range of 5 to 200μm which is produced by emulsion/solidification technology comprising the steps of:

a) preparing a solution of a complex of a Group 2 metal and an electron donor by reacting a compound of said metal with said electron donor or a precursor thereof in an organic liquid reaction medium,

b) adding said solution of said complex to at least one compound of a transition metal to produce an emulsion, wherein the dispersed phase of which is in the form of droplets and contains more than 50 mol% of the Group 2 metal in said complex,

c) agitating the emulsion in order to maintain the droplets of said dispersed phase within said predetermined average size range,

d) solidifying said droplets of the dispersed phase,

e) washing the solidified particles at least once,

f) drying the solidified particles or slurring the solidified particles to an oily liquid with or without drying and optionally

g) recovering the dried or slurried solidified particles of the olefin polymerisation catalyst component.

The Ziegler-Natta procatalysts used in the process of the invention are known in the state of the art as procatalysts for preparing polypropylene.

Their preparation is described in several patent applications.

WO 03/000757 as well as WO 03/000754 describes the basic process for the preparation of Ziegler-Natta procatalysts used in the preparation of polypropylene comprising a group 2 metal together with a transition metal, using emulsion/solidification technology.

WO 2004/029112 discloses a further process for preparing such a Ziegler-Natta procatalyst used in the preparation of polypropylene by emulsion/solidification technology, wherein the process is further characterized in that a specific aluminium alkyl compound is brought into contact with the catalyst component, enabling a certain degree of activity increase at higher temperatures.

EP-A-1 862 480 describes also a process for preparing such a Ziegler-Natta procatalyst used in the preparation of polypropylene by emulsion/solidification technology, wherein the control of catalytic activity is achieved by decreasing the amount of titanium present in the solidified particles of the olefin polymerisation catalyst component being present in the oxidation state +4 by adding a reducing agent.

EP-A-1 862 481 describes a process for preparing such a Ziegler-Natta procatalyst used in the preparation of polypropylene by emulsion/solidification technology, wherein the process is further characterized in that a specific aluminium alkoxy compound is brought into contact with the catalyst component, enabling a certain degree of activity increase at higher temperatures.

EP-A-1 939 227 describes a process for preparing such a Ziegler-Natta procatalyst used in the preparation of polypropylene by emulsion/solidification technology, wherein the process is further characterized in that a specific phosphorous compound is added.

The above cited patent applications describe the general principles of the preparation of a Ziegler-Natta procatalyst used in the preparation of polypropylene in the form of particles having a predetermined size range under inert conditions.

Thus the patent applications referred to in this specification are incorporated by reference herein.

According to the present invention such Ziegler-Natta procatalysts are used for the production of polyethylene.

As stated above these procatalysts are produced by emulsion/solidification technology comprising the steps of:

a) preparing a solution of a complex of a Group 2 metal and an electron donor by reacting a compound of said metal with said electron donor or a precursor thereof in an organic liquid reaction medium,

b) adding said solution of said complex to at least one compound of a transition metal to produce an emulsion, wherein the dispersed phase of which is in the form of droplets and contains more than 50 mol% of the Group 2 metal in said complex,

c) agitating the emulsion in order to maintain the droplets of said dispersed phase within said predetermined average size range,

d) solidifying said droplets of the dispersed phase,

e) washing the solidified particles at least once,

f) drying the solidified particles or slurring the solidified particles to an oily liquid with or without drying and optionally

g) recovering the dried or slurried solidified particles of the olefin polymerisation catalyst component,

The Group 2 metal used in step a) of the inventive process is preferably magnesium, and the liquid organic reaction medium comprises a $C_6$-$C_{10}$ aromatic hydrocarbon, preferably toluene, and/or the mixture of said aromatic hydrocarbon and an aliphatic $C_5$-$C_{20}$-hydrocarbon, preferably $C_5$-$C_{16}$ aliphatic hydrocarbon, more preferably $C_5$-$C_{12}$ aliphatic hydrocarbon and most preferably $C_5$-$C_9$ aliphatic hydrocarbon, provided that the aliphatic hydrocarbon is liquid at the temperature used in step a).

As electron donor compound to be reacted with the Group 2 metal compound is preferably a mono- or diester of an aromatic carboxylic acid or diacid, the latter being able to form a chelate-like structured complex. Said aromatic carboxylic acid ester or diester can be formed in situ by reaction of an aromatic carboxylic acid chloride or diacid dichloride with a $C_2$-$C_{16}$ alkanol and/or diol, and is preferable 2-ethyl-hexyl phthalate.

The reaction for the preparation of the Group 2 metal complex is generally carried out at a temperature of 20° to 80°C, and in case that the Group 2 metal is magnesium, the preparation of the magnesium complex is carried out at a temperature of 50° to 70°C.

The complex of the Group 2 metal is preferably a magnesium complex.

The compound of a transition metal is preferably a compound of a Group 4 metal. The Group 4 metal is preferably titanium, and its compound to be reacted with the complex of a Group 2 is preferably a halide.

In a further embodiment of the invention, a compound of a transition metal used in the process can also contain organic ligands typically used in the field known as a single site catalyst.

In a still further embodiment of the invention, a compound of a transition metal can also be selected from Group 5 metals, Group 6 metals, Cu, Fe, Co, Ni and/or Pd compounds.

In a preferred embodiment said process for producing the procatalysts comprises the steps of:

preparing a solution of magnesium complex by reacting an alkoxy magnesium compound and an electron donor or precursor thereof in a liquid reaction medium, comprising a $C_6$-$C_{10}$ aromatic hydrocarbon and/or the mixture of said aromatic hydrocarbon and an aliphatic $C_5$-$C_{16}$-hydrocarbon, more preferably in toluene and/or a mixture of toluene and an aliphatic $C_5$-$C_{12}$ and most preferably in a mixture of toluene and an aliphatic $C_5$-$C_9$-hydrocarbon; reacting said magnesium complex with a compound of at least one four-valent Group 4 metal at a temperature greater than 10°C and less than 60°C to produce an emulsion of a denser, $TiCl_4$/liquid reaction medium-insoluble, oil dispersed phase having Group 4 metal/Mg mol ratio 0.1 to 10 in an oil disperse phase having Group 4 metal/Mg mol ratio 10 to 100; agitating the emulsion, optionally in the presence of an emulsion stabilizer and/or a turbulence minimizing agent, in order to maintain the droplets of said dispersed phase within an average size range of 5 to 200 $\mu$m. The catalyst particles are obtained after solidifying said particles of the dispersed phase e.g. by heating.

The said disperse and dispersed phases are thus distinguishable from one another by the fact that the denser oil, if contacted with a solution of titanium tetrachloride in the liquid reaction medium, will not or only to a small degree dissolve in it. A suitable solution for establishing this criterion would be one having a liquid reaction medium mol ratio of 0.1 to 0.3. They are also distinguishable by the fact that the great preponderance of the Mg provided (as complex) for the reaction with the Group 4 metal compound is present in the dispersed phase, as revealed by comparison of the respective Group 4 metal/Mg mol ratios.

In effect, therefore, virtually the entirety of the reaction product of the Mg complex with the Group 4 metal - which is the precursor of the ultimate catalyst component - becomes the dispersed phase, and proceeds through the further processing steps to the final particulate form. The disperse phase, still containing a useful quantity of Group 4 metal, can be reprocessed for recovery of that metal.

The production of a two-phase, rather than single-phase (as in prior practice) reaction product is encouraged by carrying out the Mg complex/Group 4 metal compound reaction at low temperature, specifically above 10°C but below 60°C, preferably between above 20°C and below 50°C. Since the two phases will naturally tend to separate into a lower, denser phase and supernatant lighter phase, it is necessary to maintain the reaction product as an emulsion by agitation, preferably in the presence of an emulsion stabiliser.

The resulting particles from the dispersed phase of the emulsion are of a size, morphology (spherical shape) and uniformity which render the ultimate catalyst component extremely effective in olefin polymerisation. This morphology is preserved during the heating to solidify the particles, and of course throughout the final washing and optional drying steps. It is, by contrast, difficult to the point of impossibility to achieve such morphology through precipitation, because of the fundamental uncontrollability of nucleation and growth, and the large number of variables which affect these events.

Furthermore, emulsifying agents/emulsion stabilisers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particular preferred are unbranched $C_{12}$ to $C_{20}$-acrylates such as poly(hexadecyl)-methacrylate and poly(octadecyl)methacrylate.

Furthermore, in some embodiments a turbulence minimizing agent (TMA) can be added to the reaction mixture in order to improve the emulsion formation and maintain the emulsion structure. By using said TMA, catalyst component particles can be obtained, said particles having very narrow size distribution.

Reaction mixture here means the solution from the initial organic liquid reaction medium, over the solution of the complex up to the emulsion before solidifying the particles of the dispersed phase of the emulsion.

Preferably, the TMA is added to the reaction mixture when the emulsion is formed, however in any case before solidification of the droplets of the dispersed phase starts in order to make sure that a quite narrow particle size distribution can be obtained.

Said TMA agent has to be inert and soluble in the reaction mixture under the reaction conditions, which means that polymers without polar groups are preferred.

Accordingly, said TMA or mixtures thereof are preferred as polymers having linear aliphatic carbon backbone chains, which might be branched with short side chains only in order to serve for uniform flow conditions when stirring. Said TMA is in particular preferably selected from $\alpha$-olefin polymers of $\alpha$-olefin monomers with 6 to 20 carbon atoms, like polyoctene, polynonene, polydecene, polyundecene or polydodecene or mixtures thereof, having the molecular weight and general backbone structure as defined before. Most preferable it is polydecene.

TMA can be added to the emulsion in an amount of e.g. 1 to 1.000 ppm, preferably 5 to 100 ppm and more preferable 5 to 50 ppm, based on the total weight of the reaction mixture.

It has been found that the best results are obtained when the Group 4 metal/Mg mol ratio of the denser oil is 1 to 5, preferably 2 to 4, and that of the disperse phase oil is 55 to 65. Generally the ratio of the mol ratio Group 4 metal/Mg in the disperse phase oil to that in the denser oil is at least 10.

Solidification of the dispersed phase droplets by heating is suitably carried out at a temperature of 70-150°C, usually at 80-110°C, preferably at 90-110°C.

The finally obtained catalyst component is desirably in the form of particles having generally an average size range of 5 to 200 $\mu$m, preferably 10 to 100, more preferably 20 to 50 $\mu$m.

The reagents can be added to the aromatic reaction medium in any order. However it is preferred that in a first step the alkoxy magnesium compound is reacted with a carboxylic acid halide precursor of the electron donor to form an intermediate; and in a second step the obtained product is further reacted with the Group 4 metal. The magnesium compound preferably contains from 1 to 20 carbon atoms per alkoxy group, and the carboxylic acid should contain at least 8 carbon atoms.

Reaction of the magnesium compound, carboxylic acid halide and polyhydric alcohol proceeds satisfactorily at temperatures in the range 20 to 80°C, preferably 50 to 70°C. The product of that reaction, the "Mg complex", is however reacted with the Group 4 metal compound at a lower temperature, contrary to previous practice, to bring about the formation of a two-phase, oil-in-oil, product.

Use of an aromatic or aromatic/aliphatic medium for preparation of the Mg complex contributes to consistent product morphology and higher bulk density. Catalyst bulk density and morphology correlate with polymer product bulk density and morphology according to the so-called "replication effect".

The reaction medium used as solvent can be aromatic or a mixture of aromatic and aliphatic hydrocarbons, the latter one containing 5 - 20 carbon atoms, preferably 5-16 carbon atoms more preferably 5 - 12 carbon atoms and most preferably 5 to 9 carbon atoms. Preferably, the aromatic hydrocarbon is selected substituted and unsubstituted benzenes, preferably from alkylated benzenes, even more preferably from toluene and xylenes, and is most preferably toluene.

The molar ratio of said reaction medium to magnesium is preferably less than 10, for instance from 4 to 10, preferably from 5 to 9. Said aliphatic hydrocarbons also can be added to the reaction mixture separately and are then preferably added after the reaction of Mg complex with the $TiCl_4$.

For isolating the solidified particles the reaction mixture is allowed to settle and the solidified particles are recovered from this reaction mixture for example by syphoning or by an in-stream filtering unit.

The solidified particles are then washed (step e) at least once up to six times, preferably at least twice, most preferably at least three times with a hydrocarbon, which preferably is selected from aromatic and aliphatic hydrocarbons, preferably with toluene, particularly with hot (e.g. 80 to 100°C) toluene, which might include a smaller or higher amount of $TiCl_4$ in it. The amount of $TiCl_4$ can vary from a few Vol% to more than 50 Vol%, such as from 5 Vol% to 50 Vol%, preferably up to 30 Vol% and more preferably from 5 to 15 Vol%. It is also possible that at least one wash is done with

100 Vol% TiCl$_4$. One or several further washes after aromatic and/ or TiCl$_4$ washes can be run with aliphatic hydrocarbons of 4 to 8 carbon atoms. Preferable these latter washings are performed with heptane and/or pentane. Washings can be done with hot (e.g. 90°C) or cold (room temperature) hydrocarbons or combinations thereof. It is also possible that all washings will be done with the same solvent, e.g. toluene.

The washing can be optimized to give a catalyst component with novel and desirable properties. Subsequently, the washed solidified particles are dried or slurried to an oily liquid with or without drying.

The alkoxy magnesium compound group is preferably selected from the group consisting of magnesium dialkoxides, complexes of a magnesium dihalide and an alcohol, and complexes of a magnesium dihalide and a magnesium dialkoxide. It may be a reaction product of an alcohol and a magnesium compound selected from the group consisting of dialkyl magnesiums, alkyl magnesium alkoxides, alkyl magnesium halides and magnesium dihalides. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides and alkyl magnesium aryloxides.

The magnesium dialkoxide may be the reaction product of a dialkyl magnesium of the formula R$_2$Mg, wherein each one of the two Rs is a similar or different C$_1$-C$_{20}$ alkyl, preferably a similar or different C$_4$-C$_{10}$ alkyl. Typical magnesium alkyls are ethylbutyl magnesium, dibutyl magnesium, dipropyl magnesium, propylbutyl magnesium, dipentyl magnesium, butylpentylmagnesium, butyloctyl magnesium and dioctyl magnesium. Most preferably, one R of the formula R$_2$Mg is a butyl group and the other R is an octyl group, i.e. the dialkyl magnesium compound is butyl octyl magnesium.

Typical alkyl-alkoxy magnesium compounds RMgOR, when used, are ethyl magnesium butoxide, butyl magnesium pentoxide, octyl magnesium butoxide and octyl magnesium octoxide.

Dialkyl magnesium, alkyl magnesium alkoxide or magnesium dihalide can react with a monohydric alcohol R'OH or a mixture thereof with a polyhydric alcohol R'(OH)$_m$.

Typical C$_1$-C$_{20}$ monohydric alcohols are methanol, ethanol, n-propanol, iso-propanol, n-butanol, iso-butanol, sec.butanol, tert.butanol, n-amyl alcohol, iso-amyl alcohol, sec. amyl alcohol, tert. amyl alcohol, diethyl carbinol, sec. isoamyl alcohol, tert. butyl carbinol. Typical C$_6$-C$_{10}$ monohydric alcohols are hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol and 2,7-dimethyl-2-octanol. Typical >C$_{10}$ monohydric alcohols are n-1-undecanol, n-1-dodecanol, n-1-tridecanol, n-1-tetradecanol, n-1-pentadecanol,1-hexadecanol, n-1-heptadecanol and n- 1 octadecanol. The monohydric alcohols may be unsaturated, as long as they do not act as catalyst poisons.

Preferable monohydric alcohols are those of formula R'OH in which R' is a C$_2$-C$_{16}$ alkyl group, most preferably a C$_4$-C$_{12}$ alkyl group, particularly 2-ethyl-1-hexanol.

The reaction medium may also contain a polyalcohol, which may have a straight- or branched-chain. Typical C$_2$ to C$_6$ polyhydric alcohols may be straight-chain or branched and include ethylene glycol, propylene glycol, trimethylene glycol, 1,2-butylene glycol, 1,3-butylene glycol, 1,4-butylene glycol, 2,3-butylene glycol, 1,5-pentanediol, 1,6-hexanediol, 1,8-octanediol, pinacol, diethylene glycol, triethylene glycol, and triols such as glycerol, methylol propane and pentaerythritol. Further, di- and polyethers may be part of the reaction medium. The polyhydric alcohol can be selected on the basis of the activity and morphology it, gives the catalyst component.

The reaction mixture can contain the above mono- or polyhydric alcohols and di- or polyethers alone or as any mixtures.

The compound of a fourvalent Group 4 metal compound containing a halogen is preferably a titanium tetrahalide. Equivalent to titanium tetrahalide is the combination of an alkoxy titanium halide and a halogenation agent therefore, which are able to form a titanium tetrahalide *in situ*. The most preferred halide is the chloride, for zirconium and hafnium as well as for titanium.

The reaction conditions used in the claimed process may be varied according to the used reactants and agents.

As is known, the addition of at least one halogenated hydrocarbon during the process can lead to further improved catalytic activity. Reactive halogenated hydrocarbons preferably have the formula R'''X'''$_n$ wherein R''' is an n-valent C$_1$-C$_{20}$ hydrocarbyl group, particularly a C$_1$-C$_{10}$ paraffin, X''' is a halogen and n is an integer from 1 to 4.

Such chlorinated hydrocarbons include monochloromethane, dichloromethane, trichloromethane (chloroform), tetrachloromethane, monochloroethane, (1,1)-dichloroethane, (1,2)-dichloroethane, (1,1,1)-trichloroethane, (1,1,2)-trichloroethane, (1,1,1,2)-tetrachloroethane, (1,1,2,2) tetrachloroethane, pentachloroethane, hexachloroethane, (1)-chloropropane, (2)-chloropropane, (1,2)-dichloropropane, (1,3)-dichloropropane, (1,2,3)trichloropropane, (1)-chlorobutane, (2)-chlorobutane, isobutyl chloride, tert.butyl chloride, (1,4)-dichlorobutane, (1)-chloropentane, (1,5)-dichloropentane. The chlorinated hydrocarbons may also be unsaturated, provided that the unsaturation does not act as catalyst poison in the final catalyst component.

In the above formula, R''' is preferably a mono-or bivalent C$_1$-C$_{10}$ alkyl group, independently, X''' is preferably chlorine and, independently, n is preferably 1 or 2. Preferred compounds include butyl chloride (BuCl), dichloroalkanes such as (1,4)-dichlorobutane, and tertiary butyl chloride.

In addition, during the procatalyst preparation a reducing agent, which decreases the amount of titanium present in said solidified particles of the olefin polymerisation catalyst component being present in the oxidation state +4, can be added.

Suitable reducing agents are aluminium alkyl compounds, aluminium alkyl alkoxy compounds as well as magnesium compounds as defined in the present specification.

Suitable aluminium compounds have a general formula $AlR_{3-n}X_n$, wherein R stands for a straight chain or branched alkyl or alkoxy group having 1 to 20, preferably 1 to 10 and more preferably 1 to 6 carbon atoms, X independently represents a residue selected from the group of halogen, preferably chloride, and n stands for 0, 1 or 2. At least one of the R residues has to be an alkyl group.

The compound can be added as an optional compound to the procatalyst synthesis and brought into contact with the droplets of the dispersed phase of the agitated emulsion before drying or slurring the solidified particles in step f). I.e. the Al compound can be added at any step (b) to d), or during the washing step e), however, before step f). Reference is made to WO 2004/029112, EP-A-1 862 480 and to EP-A-1 862 481.

Illustrative examples of aluminium alkyl and alkoxy compounds to be employed in accordance with the present invention are:

Tri-($C_1$-$C_6$)-alkyl aluminium compounds and chlorinated aluminium alkyl compounds, especially diethyl aluminium chloride;

diethyl aluminium ethoxide, ethyl aluminium diethoxide, diethyl aluminium methoxide, diethyl aluminium propoxide, diethyl aluminium butoxide, dimethyl aluminium ethoxide, of which in particular diethyl aluminium ethoxide is preferred.

Suitable magnesium compounds are magnesium compounds as defined herein in connection with the complex of a Group 2 metal. The respective disclosure is incorporated herein by reference with respect to the magnesium compound to be added in accordance with the process of the present invention. In particular, suitable magnesium compounds are dialkyl magnesium compounds or halogenated alkyl magnesium compounds of the general formula $MgR_{2-n}X_n$, where each n is 0 or 1, and each R are same or different alkyl groups with 1 to 8 carbon atoms and X is halogen, preferably Cl. One preferred magnesium compound is butyloctyl magnesium (commercially available under the trade name BOMAG), which is already preferably used in the preparation of the Mg complex.

The optional Al compound is added in such an amount that the final catalyst component particles have Al content of 0.0 to 1.0 wt%, preferably 0.1 to 0.8 wt% or 0.2 to 0.5 wt%. The preferred amounts depend to some extent on the Al compound, e.g. if an Al alkoxy compound is used, the preferred final Al amounts seem to be lower than if e.g. Al alkyl chloride compounds are used.

The magnesium compound to be added in accordance with the present invention is added in corresponding amounts.

Preferably an Al alkyl or Al alkyl alkoxy compound, as defined above, is added.

Furthermore a small amount of a phosphorous compound can be added during the preparation of the catalyst component; preferably to the magnesium complex, the liquid/liquid two-phase system during the catalyst component preparation prior to solidification, or to the washing liquid (step e), but again before step f).

Accordingly, the addition of the phosphorous compound may be effected from step a) until the completion of the particle formation, i.e. step d), or thereafter, for example in a subsequent washing step to be carried out after step d) but prior to step f). The completion of the particle formation is usually achieved when the remaining toluene-soluble components have been washed out from the catalyst particles during solidifying said particles. Thus, the phosphorous compound can be preferably added, in pure form or in the form of a solution, from the beginning of the formation of the solution according to step a) until adding it to the washing liquid, mostly toluene. It is in particular preferred to add the phosphorous compound to the washing liquid.

The addition amount of the phosphorous compound is typically selected so that a molar ratio of Group 2 metal and phosphorous is within the range of 0.05 to 1, preferably 0.1 to 0.5, more preferably 0.1 to 0.3, and most preferably 0.15 to 0.25, such as about 0.2.

It has been found, that the amount of the final P content in the catalyst component is very small, and below the detection limit. However, in some embodiments small amounts of P can be detected in the final catalyst component, and the amount of P may be 0.8 wt% or less, preferably 0.6 wt% or less, more preferably 0.4 wt% or less.

The phosphorous compound to be used in accordance with the present invention typically is a compound comprising phosphorous in the oxidation state of +5 or +3, preferably +5. Suitable examples of phosphorous compounds of the oxidation state of phosphorous of +3 are phosphines, such as tri-alkyl or tri-aryl phosphines, such as tri-phenyl phosphine. Preferred however, are, as indicated above, phosphorous compounds comprising phosphorous in the oxidation state +5. Particular examples thereof are compounds of the formula $O=P(R)_3$ wherein the three residues R may be identical or different and may be selected among halogens, including Cl, Br, and I, preferably Cl, alkyls, alkenyls, aryls, phenyls with 1 to 20 C-atoms, preferably 1 to 16, more preferably 1 to 12 C-atoms, wherein the groups optionally may be substituted once or twice, preferably with any of the groups identified above. Still more preferably R are alkyls with 1 to 16 C-atoms, preferably 1 to 12, more preferably 1 to 8 C-atoms or Cl, and a particular example is $O=PCl_3$ which may be suitably used in particular when wishing to add the phosphorous compound already in step a) or b). Another group of particular examples thereof are compounds of the formula $O=P(OR)_3$ wherein the three residues R may be identical or different and may be selected among alkyls, alkenyls, aryls, phenyls with 1 to 20 C-atoms, preferably 1 to 16, more preferably 1 to 12 C-atoms, wherein the groups optionally may be substituted once or twice, preferably with any of the groups identified above and halogens, including Cl, Br, and I. Still more preferably R are alkyls with 1 to 16 C-atoms, preferably 1 to 12, more preferably 1 to 8 C-atoms, and Alkyls with 2 to 6 C-atoms are especially useful, such as tributyl phosphate.

The aluminium alkyl or alkoxy compound, the magnesium compound and the phosphorous compound can be used alone or in combination.

The optional Al, Mg or P compound or a mixture thereof is preferably added before step f), more preferably during the washing step e), which comprises at least one, preferably two and more preferably three washing procedures with the same or preferably different hydrocarbons as washing medium.

The aluminium alkyl or alkoxy compound, magnesium compound and/ or the phosphorous compound to be used in the catalyst component preparation of the invention can be added to any of the washing mediums, which are, as described above, preferably toluene, heptane and/or pentane.

Though the procatalyst preparation according to the inventive method can be carried out batch-wise, it is also preferable and possible to prepare the catalyst component semi-continuously or continuously. In such semi-continuous or continuous process, the solution of the complex of the group 2 metal and said electron donor, which is prepared by reacting the compound of said metal with said electron donor in an organic liquid reaction medium, is mixed with at least one compound of a transition metal, which might be solved in the same or different organic liquid reaction medium. The so obtained solution is then agitated, possibly in the presence of an emulsion stabilizer, and then the so-agitated emulsion is fed into a temperature gradient reactor, in which the emulsion is subjected a temperature gradient, thus leading to solidifying the droplets of a dispersed phase of the emulsion. The optional TMA is preferably contained in the solution of the complex or added to the solution before feeding the agitated solution to the temperature gradient reactor.

When feeding said agitated emulsion to the temperature gradient reactor, an inert solvent, in which the droplets are not soluble, can additionally be fed into that gradient reactor in order to improve the droplet formation and thus leading to a uniform grain size of the particles of the catalyst component, which are formed in the temperature gradient reactor when passing through said line. Such additional solvent might be the same as the organic liquid reaction medium, which is used for preparing the solution of the complex of the group 2 metal as explained above in more detail.

The solidified particles of the olefin polymerisation catalyst component can subsequently be recovered by an in-stream filtering unit and then, optionally after some additional washing and drying steps in order to remove unreacted starting components, can be stored for further use. In one embodiment the catalyst can be fed after washing steps into the olefin polymerisation reactor, so that a continuous preparation and feed to the reactor is guaranteed. It is also possible to mix the solidified and washed catalyst component with an oily fluidic liquid and store and use the catalyst component as catalyst component-oil slurry. In this way the drying steps can be avoided, which might be sometimes detrimental to the catalyst components morphology. This oil-slurry method is described in general in EP-A-1489110 of the applicant, incorporated herein by reference.

As it can be seen from the above description of the semi-continuous or continuous process, it is thus possible to use separated reaction vessels for the different process steps and to transfer the reaction products which are prepared in the respective reaction vessels and to feed them in-line into further reaction vessels for formation of the emulsion and, subsequently, of the solidified particles.

It is preferred to use a full-continuous process as the time saving in said process is remarkable. In such fully continuous process, the formation of the solidified particles could be carried out in the temperature gradient line in the kind of pipe reactor, which is sufficiently long and which is subjected said temperature gradient from the starting temperature in the lower range of 20 to 80°C up to a "solidifying" temperature of 70 to 150°C. The temperature gradient is preferably obtained by means of heating the pipe reactor from the outside by applying normal heaters, microwaves, etc.

As mentioned before, a filtering unit might preferably be used for filtering the solidified particles from the solvent stream. For said filtering unit, various drums and sieving systems can be used, depending on the specific particle sizes.

The catalyst preparation is to be carried out under oxygen and moister free conditions. In general, this means that catalyst preparation is performed under an inert gas atmosphere. Typical inert gases suitable for such catalyst preparations are for example argon and nitrogen.

According to one specific embodiment of the present invention the inert gas, like for example nitrogen, used according to the state of the art for providing inert (oxygen and moisture free) conditions can be replaced totally or partially with $H_2$ from 5% up to 100% (Vol%) during the preparation of the catalyst component.

Thus, preferably a mixture of $H_2$ and $N_2$, for example a Formier gas, is used for preparing the catalyst component according to the invention.

The Vol%-ratio between $N_2$ and $H_2$ of the preferably used Formier gas can vary from 95:5 to 70:30.

Formier gases are commercially available with the following Vol%-ratio ($N_2/H_2$):

95/5; 92/8; 90/10; 85/15; 80/20 and 70/30.

According to the present invention Formier gases with a Vol%-ratio ($N_2/H_2$) of 95/5; 92/8; 90/10; 85/15 are preferred. More preferably a Formier gas with a Vol%-ratio ($N_2/H_2$) of 95/5 or 90/10 is used.

However, it has to be understood that use of a Formier gas is only one practical possibility to incorporate $H_2$ into the catalyst preparation. It is naturally possible that the reactions are carried out under an inert gas atmosphere using $N_2$ or e.g. argon gas, but $H_2$-gas being added separately at any desired step into the system.

The $H_2$ or the Formier gas can be added according to the invention to at least one of the production steps a) to g) up to during all of the production steps a) to g).

Preferably the $H_2$ or the Formier gas is added during washing (step e); during drying (step f); during washing and drying or recovering (step e and f or g); during or after slurring the solidified particles to an oily liquid without drying (step f), during step g); during step a) to step f) or during the whole preparation process (step a to step g).

In a further embodiment of the present invention ethylene can be added during all the washing steps (step e) and/or during or after the preparation of the oil slurry of the ready catalyst (step f) and or during recovering (step g) in addition to $H_2$ or to the Formier gas.

According to the invention the above described procatalysts are used in the preparation of polyethylene.

In this process the procatalyst is combined with a cocatalyst.

Useful cocatalysts are, among others, aluminium alkyls, aluminium alkyl halides and aluminium alkoxy compounds. Especially preferred cocatalysts are aluminium alkyls, in particular aluminium trialkyls, such as trimethyl aluminium, triethyl aluminium and tri-isobutyl aluminium.

Cocatalyst(s) are usually fed separately to the actual polymerisation step. The cocatalyst is typically used in excess to the transition metal of the transition metal compound. For instance, when an aluminium alkyl is used as a cocatalyst, the molar ratio of the aluminium in the cocatalyst to the transition metal in the transition metal component is from 1 to 500 mol/mol, preferably from 2 to 100 mol/mol, more preferably from 5 to 50 mol/mol and in particular from 10 to 30 mol/mol.

The catalyst system, comprising the above described procatalyst and a cocatalyst is especially suitable for the production of polyethylene homo- or copolymers

With such a catalyst system it is further possible to produce different kinds of polyethylene, like low density polyethylene (LDPE), medium density polyethylene (MDPE) and high density polyethylene (HDPE), preferably MDPE and HDPE, in the gas phase and/or in a slurry polymerisation.

Suitable polyethylene homopolymers and copolymers comprise from 0 to 20 wt % $C_3$-$C_{12}$ olefins, preferably $C_4$-$C_{10}$ olefins, such as 1-butene, isobutene, 1-pentene, 1-hexene, 4-methyl-1-pentene, 1-heptene, 1-octene, 1-nonene, 1-decene more preferably $C_3$ to $C_6$-alpha-olefins, and most preferably butene or hexene, or mixtures thereof, as well as diene, such as butadiene, 1,7-octadiene and 1,4-hexadiene, or cyclic olefins, such as norbornene, and any mixtures thereof.

The ethylene homopolymer and copolymer compositions of the invention have a density in the range of about 860 kg/m$^3$ to about 970 kg/m$^3$, preferably about 880 to 970 kg/m$^3$, more preferably between about 890 to about 970 kg/m$^3$ and most preferably between about 895 to 970 kg/m$^3$.

The polyolefin composition further can show unimodal, bimodal or multimodal molecular weight distribution.

The above described procatalyst respectively the Ziegler-Natta catalyst system can be used in any conventional ethylene (co)polymerisation process, in a manner known in the art. Such processes include, among others, slurry polymerisation process, fluidised bed gas phase polymerisation process, agitated bed gas phase polymerisation process and solution polymerisation process or combinations of the above mentioned processes.

The polymerisation process can be a single or multistage process including a two-, three or four stage process. In such a multi-stage polymerisation the reactors are preferably connected in series such that the products of one reactor are used as the starting material in the next reactor.

The polymerisation may be carried out continuously or batch wise, preferably the polymerisation is carried out continuously.

The polyethylene copolymer can further show unimodal, bimodal or multimodal molecular weight distribution.

Unimodal polymers can be produced in a one stage polymerisation, although more than one stage is possible, but then polymers with approximately the same molecular weight are produced in each stage. Any type of polymerisations as listed above is possible.

Bimodal or multimodal polyethylene copolymers can be produced in dual or multi-stage and - reactor processes which are known in the art.

Different combinations for producing multimodal polymers can be used, e.g. gas-gas phase, slurry-slurry phase, slurry-gas phase processes; slurry-gas phase polymerisation being a preferred one.

Multimodal polymers with respect to the molecular weight distribution (MWD) are produced in a multistage process, where lower molecular weight and higher molecular weight polymers (components) are produced in different polymerisation steps, in any order.

If the lower molecular weight component is produced in the first stage and the higher molecular weight component thus being produced in the second step, this is called normal mode.

On the contrary, if the lower molecular weight component is produced in the second stage and the higher molecular weight component thus being produced in the first step, this is called reverse mode.

Preferably the process according to the invention is run in the normal mode.

More preferably the production of the lower molecular weight and higher molecular weight components is carried out as a combination of slurry polymerisation for the lower molecular weight component and gas phase polymerisation for the higher molecular component.

Thus the first stage is carried out in the slurry phase and produces preferably the lower molecular weight component. The second stage can be carried out in a gas phase or in a slurry phase, but is preferably carried out in the gas phase. Preferably the second stage produces the higher molecular weight component. In a preferred polymerisation process one slurry phase stage is followed by one gas phase stage.

The slurry and gas stages may be carried out using any conventional reactors known in the art. A slurry phase polymerisation may, for example, be carried out in a continuously stirred tank reactor; a batch-wise operating stirred tank reactor or a loop reactor. Preferably slurry phase polymerisation is carried out in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerisation step is a fluidized bed reactor.

Optionally the process according to the invention can comprise one or two additional polymerisation steps.

These optional one or two additional polymerisation steps preferably comprise gas phase polymerisation steps.

The reactor system may additionally comprise other reactors, e.g. for pre-polymerisation. Pre-polymerisation may be used, for example, to provide the catalyst in a solid particulate form or to activate the catalyst. In a typical pre-polymerisation, monomer (e.g. ethylene) is polymerised with the catalyst system, as hereinbefore described, to yield, for example, 0.1 to 1000 g polymer per gram of catalyst. The polymer formed during pre-polymerisation forms less than 10 % by weight, preferably less than 7 % by weight, typically less than 5 % by weight of the total weight of the final polymer. Still more preferably only 2-3 % of the total weight of the polymer is formed during any pre-polymerisation step. A pre-polymerisation is therefore not intended to represent one of the stages of the polymerisation processes hereinbefore described.

A preferred multistage process for producing ethylene (co)polymers is a "loop-gas phase"-process, such as developed by Borealis (known as BORSTAR® technology) described e.g. in patent literature, such as in EP 0 517 868, EP 0 887 379.

For slurry reactors the polymerisation medium typically comprises ethylene, optionally a comonomer, a diluent and a catalyst system as hereinbefore described. The diluent used will generally be an aliphatic hydrocarbon having a boiling point in the range -70 to +100 °C. Preferred diluents include hydrocarbons such as propane, n-butane or isobutane, with propane as particularly preferred. Hydrogen is also preferably fed into the reactor to function as a molecular weight regulator. In a typical slurry phase polymerisation the temperature is preferably in the range 40 to 110 °C, preferably 60 to 100 °C and in particular 85 to 100°C.

The reaction pressure is typically 10 to 150 bar, preferably 15 to 100 bar.

In some cases it may be preferred to conduct the polymerisation at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture. When propane is used as a diluent an example of a suitable operating temperature is 95 °C and pressure 60 bar when employing supercritical conditions.

Polymerisation in the first reactor (e.g. a loop reactor) is typically carried out for 10 to 300 minutes, preferably 20 to 120 minutes and the most preferably 30 to 90 minutes.

At least part of the volatile components of the reaction medium (e.g. hydrogen) may then be removed. The product stream is then subjected to a second polymerisation stage.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

The second polymerisation is preferably carried out using the same catalyst system as hereinbefore described in the first stage (i.e. no fresh catalyst is added in the second stage).

In the second polymerisation stage for producing bimodal polyethylene copolymer preferably the higher molecular weight component of the polyethylene copolymer is produced. The second stage is preferably carried out in the gas phase. The polymer produced in the second stage is preferably a copolymer.

As gas phase reactors preferably fluidized bed gas phase reactors, fast fluidized bed gas phase reactors or settled bed gas phase reactors can be used.

Ad fluidized bed gas phase reactors:

In a fluidized bed gas phase reactor an olefin is polymerised in the presence of a polymerisation catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

The reactor may also include a mechanical agitator to further facilitate mixing within the fluidized bed. An example of suitable agitator design is given in EP-A-707513.

Ad fast fluidized bed reactor:

In such a reactor the velocity of the fluidization gas exceeds the onset velocity of pneumatic transport. Then the whole bed is carried by the fluidization gas. The gas transports the polymer particles to a separation device, such as cyclone, where the gas is separated from the polymer particles.

Ad settled bed reactor:

In the settled bed the polymer flows downward in a plug flow manner in an environment containing reactive components in gaseous phase. The polymer powder is introduced into the bed from the top from where it flows downwards due to gravity.

Polymerisation in settled bed is disclosed, among others, in EP-A-1633466, EP-A-1484343 and WO-A-97/04015.

In the process according to the invention preferably a fluidized bed gas phase reactors is used for the second polymerisation step.

For gas phase reactors used according to the invention, the reaction temperature used will generally be in the range 60 to 115 °C (e.g. 70 to 110°C), the reactor pressure will generally be in the range 10 to 30 bar, and the residence time will generally be 0.5 to 8 hours. Preferably the residence time in the gas phase reactor is 1 to 4 hours, more preferably 1.5 to 3 hours.

The polymerisation medium in the second stage typically comprises ethylene, comonomers (e.g. 1-butene, 1-hexene, or octene), nitrogen, propane and optionally hydrogen.

If the polymerisation process comprises one or two additional polymerisation steps, these steps are preferably performed in gas phase reactors, as described above.

Any combination of gas phase reactors can be used.

For example, the polymerisation product of the second polymerisation step, which is either a fluidized bed polymerisation step or a fast fluidized bed polymerisation step, preferably a fluidized bed polymerisation step is transferred into a third polymerisation reactor, which is for example a settled bed polymerisation reactor. The product from the third polymerisation step is optionally transferred into a fourth reaction step, which uses for example again a fluidized bed polymerisation reactor. From the fourth reaction reactor the polymer is recovered and sent to further processing.

The use of two or three subsequent fluidized bed polymerisation reactors is a further possibility.

In any embodiment it is possible to feed additional procatalyst into any of the reaction zones respectively polymerisation step. However, it is preferred that the solid procatalyst is introduced into the prepolymerisation step only and that no fresh solid procatalyst is added into any reaction zone respectively polymerisation step. Thus, the solid procatalyst entering a polymerisation step comes from the preceding polymerisation step(s) only. However, additional cocatalyst can be introduced into the reaction stages if necessary. This may be done, for instance, to increase the activity of the catalyst or to influence the isotacticity of the polymer.

Generally the quantity of catalyst composition used depends upon the nature of the catalyst composition, the reactor types and conditions and the properties desired for the polymer product.

The melt flow rate and the density as well as the molecular weight of the resulting ethylene copolymers can be controlled independently over wide ranges.

The advantages of using the catalyst system known as polypropylene catalyst system for producing polyethylene according to the present invention are a very flat activity time drift, high comonomer incorporation capability and relatively flat comonomer time drift. Furthermore the inventive use leads to narrower PDIs of the produced polyethylene compared to polyethylene prepared by conventional ZN-PE catalysts, which is a special benefit in multimodal polymerisation systems.

Due to the use of the catalyst system in accordance with the present invention it is possible to control the PDI of the polyethylene produced, to low values of 3.9 or less, preferably 3.7 or less and more preferably 3.6 or less. PDI values of 3.3 to 3.5 and even as low as 3.1 are possible in accordance with the present invention by using the catalyst system known as polypropylene catalyst system according to the present invention.

## Experimental and Examples

Definitions and Measurement Methods

### Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer and the molecular weight. The MFR is determined at 190°C for polyethylene. It may be determined at different loadings such as 2.16 kg (MFR2), 5 kg (MFR5) or 21.6 kg (MFR21).

**FRR21/2** is the ratio of $MFR_{21}/MFR_2$

The **Melting Temperature ($T_m$) and the Crystallization Temperature ($T_{cr}$)** were measured with Mettler TA820 differential scanning calorimeter (DSC) on $3\pm0.5$ mg samples. Both crystallization and melting curves were obtained during 10°C/min cooling and heating scans between -10 - 200°C. Melting and crystallization temperatures were taken as the peaks of endotherms and exotherms, respectively. The degree of crystallinity was calculated by comparison with heat of fusion of a perfectly crystalline polyethylene, i.e. 290 J/g.

Crystallinity was calculated from the melting curve using the equation

$$\Delta H_{sample}/\Delta H_{100\%}$$

$\Delta H_{100\%}$ = 290 J/g was used for 100% crystalline PE.

### GPC: Molecular weight averages, molecular weight distribution, and polydispersity index (Mn, Mw, MWD, PDI)

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A Waters GPCV2000 instrument, equipped with differential refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert butyl-4-methyl-phenol) as solvent at 140 °C and at a constant flow rate of 1 mL/min. 209.5 $\mu$L of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants for PS, PE and PP used are as per ASTM D 6474-99. All samples were prepared by dissolving 0.5 - 4.0 mg of polymer in 4 mL (at 140 °C) of stabilized TCB (same as mobile phase) and keeping for max. 3 hours at max. 160 °C with continuous gentle shaking prior sampling in into the GPC instrument.

**Density** was determined according to ISO 1183 on compression-moulded specimens.

**Comonomer content** of the obtained products was measured in a known manner based on Fourier transform infrared spectroscopy (FTIR) calibrated with $^{13}$C-NMR, using Nicolet Magna 550 IR spectrometer together with Nicolet Omnic FTIR software.

Films having a thickness of about 220 to 250 $\mu$m were compression moulded from the samples. Similar films were made from calibration samples having a known content of the comonomer. The thicknesses were measured from at least five points of the film. The films were then rubbed with sandpaper to eliminate reflections. The films were not touched by plain hand to avoid contamination. For each sample and calibration sample at least two films were prepared. The films were pressed from pellets by using a Graceby Specac film press at 150 °C using 3 + 2 minutes preheating time, 1 minute compression time and 4 to 5 minutes cooling time. For very high molecular weight samples the preheating time may be prolonged or the temperature increased.

The comonomer content was determined from the absorbance at the wave number of approximately 1378 $cm^{-1}$. The comonomer used in the calibration samples was the same as the comonomer present in the samples. The analysis was performed by using the resolution of 2 $cm^{-1}$, wave number span of from 4000 to 400 $cm^{-1}$ and the number of sweeps of 128. At least two spectra were run from each film.

The comonomer content was determined from the spectrum from the wave number range of from 1430 to 1100 $cm^{-1}$. The absorbance is measured as the height of the peak by selecting the so-called short or long base line or both. The short base line is drawn in about 1410 - 1320 $cm^{-1}$ through the minimum points and the long base line about between 1410 and 1220 $cm^{-1}$. Calibrations need to be done specifically for each base line type. Also, the comonomer content of the unknown sample needs to be within the range of the comonomer contents of the calibration samples.

**Example 1**: Preparation of the Mg complex

A magnesium complex solution was prepared under inert conditions in a nitrogen atmosphere by adding, with stirring, 55.8 kg of a 20 % solution in toluene of BOMAG ($Mg(BU)_{1,5}(OCt)_{0,5}$) to 19,4 kg 2-ethylhexanol in a 150 l steel reactor. During the addition the reactor contents were maintained below 20 °C. The temperature of the reaction mixture was then raised to 60 °C and held at that level for 30 minutes with stirring, at which time reaction was complete. 5.50 kg 1,2-phthaloyl dichloride was then added and stirring of the reaction mixture at 60 °C was continued for another 30 minutes. After cooling to room temperature a yellow solution was obtained.

**Example 2**:Preparation of the procatalyst A:

The solid procatalyst was prepared as described in Example 8 of WO 2004/029112, except that diethylaluminium chloride was used as an aluminium compound instead of triethylaluminium.

**Example 3**:Copolymerisation of ethylene and hexene

A 3 l autoclave reactor was used. 1800 ml of iso-butane was introduced in room temperature into the reactor as reaction medium. After adding the polymerisation medium the temperature of the reactor system was set to 85 °C. The catalyst and the co-catalyst (TEA) were fed into the reactor by means of two feed vessels that were connected in line to the reactor lid. About 27 mg of the catalyst was added into the upper feed vessel together with 10 ml (6.3 g, 87 mmol) of pentane. 0.5 ml of 20 wt% heptane solution of tri-ethyl-aluminium (TEA) was used as co-catalyst. The co-catalyst was first let into the reactor and the catalyst was after that introduced by pressurising the upper feed vessel to 80 bar with $N_2$ and there after letting the over pressure push in the catalyst in to the reactor. This manoeuvre was done four times after which the feed vessel was flushed three times with all together about 100 ml of propane. The whole feed operation was done automatically. Two additional feed vessels were connected in series between the lid of the reactor and the ethene monomer feed line. 3 bar of hydrogen was introduced to the lower 520 ml feed bomb (66 mmol, 122 mg $H_2$) and 150 ml of hexene co-monomer was introduced into the upper feed vessel. The polymerisation was started by opening the monomer feed line and thereby introducing both the co-monomer, the hydrogen and the ethene monomer. Partial pressure of added ethene was 6.7 bar. A pressure of about 23 bar was maintained by the ethene feed trough out the test polymerisation. The co-monomer feed vessel was disconnected from the line when the wanted pressure had been reached. The co-polymerisation was carried out at 85 °C. The co-polymerisation was continued for 60 min. The polymerisation was stopped by venting off the monomer and the iso-butane.

**Comparative Example 1 (CE1):**

Example 3 was repeated using a conventional ZN-PE catalyst polymerisation catalyst sold by BASF under a trade name of Lynx 200

The parameters and results of Examples 3 and CE1 are shown in Table 1:

Table 1:

|  | Example 1 | CE1 |
|---|---|---|
| Medium isobutane (ml) | 1800 | 1800 |
| Temperature (°C) | 85 | 85 |
| Total Pressure (Bar) | 23 | 23 |
| Ethylene + hydrogen pressure (Bar) | 7.2 | 7.2 |
| Hydrogen Pressure (Barg/520ml) | 3 | 3 |
| Al/Ti (mol/mol) | 30 | 17 |
| Amount Catalyst (mg) | 27.3 | 16.7 |
| Comonomer 1-Hexene(ml) | 150 | 100 |
| Run Time (min) | 60 | 60 |
| Activity (kg/gTi/h) | 369 | 584 |
| MFR 5 (g/10min) | 0.8 | 0.4 |
| MFR 21.6 (g/10min) | 6.1 | 10.5 |
| FRR (21/5) | 7.6 | 26.3 |
| Density (kg/m$^3$) | 931.1 | 934.9 |
| $M_w$ (g/mol) | 167000 | 191000 |
| $M_n$ (g/mol) | 54100 | 47000 |
| PDI ($M_w/M_n$) | 3.1 | 4.1 |
| Hexene Content in PE by FTIR (wt%) | 3.0 | 3.3 |
| Melting temperature (°C) | 126.4 | 128.3 |

From Table 1 it can be clearly seen that the use of the ZN-PP-catalyst leads to narrower PDIs of the produced polyethylene compared to polyethylene prepared by conventional ZN-PE catalysts, which is a special benefit in multimodal polymerisation systems.

**Claims**

1. Process for the production of polyethylene comprising the presence of a Ziegler-Natta polypropylene procatalyst in the form of particles having a predetermined average size range of 5 to 200μm, obtained by emulsion/solidification technology comprising the steps of:

   a) preparing a solution of a complex of a Group 2 metal and an electron donor by reacting a compound of said metal with said electron donor or a precursor thereof in an organic liquid reaction medium,
   b) adding said solution of said complex to at least one compound of a transition metal to produce an emulsion, wherein the dispersed phase of which is in the form of droplets and contains more than 50 mol% of the Group 2 metal in said complex,
   c) agitating the emulsion in order to maintain the droplets of said dispersed phase within said predetermined average size range,
   d) solidifying said droplets of the dispersed phase,
   e) washing the solidified particles at least once,
   f) drying the solidified particles or slurring the solidified particles to an oily liquid with or without drying and optionally
   g) recovering the dried or slurried solidified particles of the olefin polymerisation catalyst component.

2. Process according to claim 1, wherein in step a) said Group 2 metal is magnesium and said electron donor is a mono- or diester of an aromatic carboxylic acid or diacid and wherein said aromatic carboxylic acid ester or diester is formed in situ by reaction of an aromatic carboxylic acid chloride or diacid dichloride with a $C_2$-$C_{16}$-alkanol and/or diol and wherein the preparation of the Group 2 metal complex is carried out at a temperature of 20° to 80°C in an organic liquid comprising a $C_6$-$C_{10}$ aromatic hydrocarbon or a mixture of a $C_6$-$C_{10}$ aromatic hydrocarbon and a $C_5$-$C_{20}$ aliphatic hydrocarbons.

3. The process according to claims 1 and 2, wherein said Group 2 metal complex and said transition metal compound are reacted at a temperature of 10° to 60°C in step b) and said metal complex is a magnesium complex and said transition metal compound is a Group 4 metal compound.

4. The process according to any of the preceding claims 1 to 3, wherein during the procatalyst preparation optionally an aluminium compound having a general formula $AlR_{3-n}X_n$, wherein R stands for a straight chain or branched alkyl or alkoxy group having 1 to 20, with at least one R being an alkyl group, X independently represents a residue selected from the group of halogen, and n stands for 0, 1, 2 or 3, and/or a magnesium compound of the general formula $MgR_{2-n}X_n$, where each n is 0 or 1, and each R are same or different alkyl groups with 1 to 8 carbon atoms and X is halogen, and/or a phosphorous compound comprising phosphorous in the oxidation state +3 or +5 of the formula $O=P(OR)_3$, wherein the three residues R may be identical or different and may be selected among alkyls, alkenyls, aryls, phenyls with 1 to 20 C-atoms, wherein the groups optionally may be substituted once or twice, is added at any stage b) to e) before drying or slurring the solidified particles in step f) and/or optionally $H_2$-gas is added to at least one of the production steps a) to g).

5. Process according to any of preceding claims 1 to 4, wherein the Ziegler-Natta polypropylene procatalyst is combined with a cocatalyst selected from the group of aluminium alkyl-, aluminium alkyl halide- and aluminium alkoxy compounds.

6. Process according to any of preceding claims 1 to 5 wherein the polyethylene is produced in a single-stage process or multistage process, including a two-, three or four stage process with slurry polymerisation, gas phase polymerisation, solution polymerisation or combinations therefrom.

7. Use of a Ziegler-Natta polypropylene procatalyst in the form of particles having a predetermined average size range of 5 to 200μm, obtained by emulsion/solidification technology comprising the steps of:

a) preparing a solution of a complex of a Group 2 metal and an electron donor by reacting a compound of said metal with said electron donor or a precursor thereof in an organic liquid reaction medium,
b) adding said solution of said complex to at least one compound of a transition metal to produce an emulsion, wherein the dispersed phase of which is in the form of droplets and contains more than 50 mol% of the Group 2 metal in said complex,
c) agitating the emulsion in order to maintain the droplets of said dispersed phase within said predetermined average size range,
d) solidifying said droplets of the dispersed phase,
e) washing the solidified particles at least once,
f) drying the solidified particles or slurring the solidified particles to an oily liquid with or without drying and optionally
g) recovering the dried or slurried solidified particles of the olefin polymerisation catalyst component,

for producing polyethylene homo- or copolymers comprising 0 to 20 wt% of $C_3$-$C_{12}$-comonomer with a PDI of 3.8 or less, preferably 3.6 or less, more preferably 3.5 or less.

8. Use according to claim 7 wherein the Ziegler-Natta polypropylene procatalyst is combined with a cocatalyst selected from the group of aluminium alkyl-, aluminium alkyl halide- and aluminium alkoxy compounds.

Europäisches
Patentamt

European
Patent Office

Office européen
des brevets

# EUROPEAN SEARCH REPORT

Application Number

EP 10 16 7508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 1 939 227 A1 (BOREALIS TECH OY [FI]) 2 July 2008 (2008-07-02) * paragraph [0089] - paragraph [0090] * * claims 1,12,13,22,23,31,32,34,35,36 * ----- | 1-8 | INV. C08F10/02 C08F4/651 C08F4/655 |
| X | EP 1 375 528 A1 (BOREALIS POLYMERS OY [FI]) 2 January 2004 (2004-01-02) * example 2 * ----- | 1,3-8 | |

TECHNICAL FIELDS
SEARCHED      (IPC)

C08F

The present search report has been drawn up for all claims

| Place of search | Date of completion of the search | Examiner |
|---|---|---|
| The Hague | 30 November 2010 | Fischer, Brigitte |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 16 7508

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2010

| Patent document cited in search report | | Publication date | Patent family member(s) | | Publication date |
|---|---|---|---|---|---|
| EP 1939227 | A1 | 02-07-2008 | CN | 101573389 A | 04-11-2009 |
| | | | WO | 2008080621 A1 | 10-07-2008 |
| | | | US | 2010216957 A1 | 26-08-2010 |
| EP 1375528 | A1 | 02-01-2004 | AU | 2002361157 A1 | 31-12-2003 |
| | | | AU | 2003245977 A1 | 31-12-2003 |
| | | | BR | 0215743 A | 22-03-2005 |
| | | | CN | 1628133 A | 15-06-2005 |
| | | | CN | 101298484 A | 05-11-2008 |
| | | | WO | 03106510 A1 | 24-12-2003 |
| | | | WO | 03106508 A1 | 24-12-2003 |
| | | | EP | 1513884 A1 | 16-03-2005 |
| | | | JP | 2005529997 T | 06-10-2005 |
| | | | US | 2006111523 A1 | 25-05-2006 |
| | | | US | 2007249489 A1 | 25-10-2007 |
| | | | ZA | 200410187 A | 06-09-2005 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9525758 A
- WO 03000757 A
- WO 03000754 A
- WO 2004029112 A
- EP 1862480 A
- EP 1862481 A
- EP 1939227 A
- EP 1489110 A
- US 4582816 A
- US 3405109 A
- US 3324093 A
- EP 479186 A
- US 5391654 A

- EP 0517868 A
- EP 0887379 A
- US 3374211 A
- US 3242150 A
- EP 1310295 A
- EP 891990 A
- EP 1415999 A
- EP 1591460 A
- EP 1860125 A
- EP 707513 A
- EP 1633466 A
- EP 1484343 A
- WO 9704015 A

**Non-patent literature cited in the description**

- **GELDART.** Gas Fluidization Technology. J.Wiley & Sons, 1986